# EUROPÄISCHE PATENTSCHRIFT

(11) **EP 2 422 862 B1**
(45) Veröffentlichungstag und Bekanntmachung des Hinweises auf die Patenterteilung: **04.06.2014**
(21) Anmeldenummer: 10174002.5
(22) Anmeldetag: 25.08.2010
(51) Int. Cl.: B01D 21/24, B01D 17/02, B01D 21/00, B01D 21/26

(54) **Abscheider zum Trennen eines Ein- oder Mehrphasengemisches**
Separator for separating a single- or multiphase mixture
Séparateur pour la séparation d'un mélange à une ou plusieurs phases

(43) Veröffentlichungstag der Anmeldung: 29.02.2012
(73) Patentinhaber: AWAS AG, 8268 Salenstein (CH)
(72) Erfinder: Ihne, Heinz, 57234 Wilnsdorf (DE)
(74) Vertreter: Schmauder, Klaus Dieter

(56) Entgegenhaltungen:
- EP-A1- 0 960 643
- WO-A1-93/07946
- GB-A- 522 316
- US-A1- 2005 194 322

## Beschreibung

### Technisches Gebiet

Die vorliegende Erfindung betrifft allgemein einen Abscheider. Speziell betrifft die Erfindung einen Abscheider zum Trennen eines Ein- oder Mehrphasengemisches. , insbesondere eines Anteils Leichtflüssigkeit und eines Anteils Schlamm, oder eines Einphasengemisches eines kleineren Anteils Leichtflüssigkeit und eines grösseren Anteils Schwerflüssigkeit, wie ölverschmutztes und gegebenenfalls Schlamm führendes Wasser.

### Stand der Technik

Aus der EP 0 960 643 A1 ist ein Spiralabscheider für Öl und Schlamm bekannt, das ein Abscheidebecken zum Auffangen der Leichtflüssigkeit und ggf. des Schlammes, einem Zulaufrohr für das zu trennende Gemisch und einem Ablaufrohr für von Leichtflüssigkeit und ggf. von Schlamm weitgehend befreite Schwerflüssigkeit aufweist. Das Abscheidebecken ist so ausgebildet ist, dass Flüssigkeit zumindest bis zu einem von einer Ablaufschwelle vom Abscheidebecken zum Ablaufrohr hin vorgegebenen niedrigsten Flüssigkeitsspiegel enthält. Der Abscheider weist weiterhin einen innerhalb des Abscheidebeckens angeordneten Leichtflüssigkeit-Sammler mit einer im Wesentlichen rohrförmige vertikale Wandung aufweist. Bei dem Abscheider der EP 0 960 643 A1 gelangt das Gemisch vom Zulaufrohr zum Inneren des Sammlers und aus einem unteren Bereich des Sammlers gelangt Schwerflüssigkeit und ggf. Schlamm zu einem unteren Bereich des Abscheidebeckens hin. Innerhalb des Sammlers ist eine Trennwand angeordnet, die im Wesentlichen als Ausschnitt einer Regelfläche geformt ist. Die Trennwand ergibt sich aus vertikalen Erzeugenden und einer horizontalen spiralartigen Leitkurve und rollt sich ausgehend von der Wandung des Sammlers im Wesentlichen bis zur Achse des Sammlers mit spiralartigen Windungen ein. Aufeinanderfolgende Windungen der Trennwand definieren miteinander einen spiralartigen Zwischenraum, während eine äusserste Windung der Trennwand zusammen mit der Wandung des Sammlers einen äussersten Zwischenraum definiert. Gemäss der EP 0 960 643 A1 soll sowohl die Wandung des Sammlers wie auch die Trennwand je einen oberen Rand aufweisen, der zumindest im Bereich des äussersten Zwischenraumes höher liegt als der niedrigste Flüssigkeitsspiegel. Weiterhin soll - gemäss der EP 0 960 643 A1 - das Zulaufrohr durch die Wandung des Sammlers hindurch und annähernd tangential dazu in den äussersten Zwischenraum des Sammlers einmünden und der äusserste Zwischenraum soll zumindest im Bereich einer Eintrittsmündung des Zulaufrohres eine horizontal-radiale lichte Weite aufweisen, die annähernd einer horizontalen Weite des Zulaufrohres entspricht. Allerdings ist der Abscheider der EP 0 960 643 A1 weniger geeignet, ein Zwei- oder Dreiphasengemisch zu trennen, bei dem eine Phase z.B. aus Sand oder kleinerem Steingeröll besteht.

### Darstellung der Erfindung

Aufgabe der Erfindung ist es, den gattungsgemässen Abscheider weiter zu verbessern. Insbesondere soll der Abscheider gemäss der Aufgabe der Erfindung geeignet sein, ein Zwei- oder Dreiphasengemisch zu trennen, bei dem eine Phase z.B. aus Partikeln, Sand und/oder absetzbaren Stoffen besteht.

Diese Aufgabe wird durch einen Abscheider nach Anspruch 1 gelöst. Erfindungsgemäss ist das Abscheidebecken zumindest im unteren Bereich trichterförmig ausgebildet. Die innere Spirale des spiralartigen Zwischenraums zieht sich bis weit in den trichterförmig ausgebildeten Schlammabsetzraum bis nahe bis an das Schlammabzugssystem hin. Dabei haben die Massnahmen der Erfindung zunächst einmal zur Folge, dass durch die trichterförmige Ausbildung der Spiralwände und des gesamten Einbauteils die Ablaufwerte und die Trennung von Öl und Partikeln verbessert werden. Der Schlammabsetzraum ist unter dem Gemischtrenner und Leichtflüssigkeitssammler angeordnet, wobei die innere Windung der Trennwand eben tiefer in das Abscheidebecken geführt ist als die äussere Windung.
Die Verbesserungen wirken sich insbesondere beim Trennen eines Zweiphasengemisches mit einem Anteil Leichtflüssigkeit und einem Anteil Schlamm aus, aber auch bei der Trennung Einphasengemisches mit einem kleineren Anteil Leichtflüssigkeit und einem grösseren Anteil Schwerflüssigkeit, wie ölverschmutztes und gegebenenfalls Schlamm führendes Wasser.

Als besonders vorteilhaft hat sich herausgestellt, wenn die die Windungen der Trennwand konisch angeordnet sind derart, dass die unteren Bereiche der Trennwand jeweils einen kleineren Spiralradius aufweisen als die obere Bereiche.

Es ist bekannt, dass sich bei dem Abscheider gemäss dem Stand der Technik nach ca. 100 - 120° Umdrehung sich im Wirbelweg strömungstechnisch eine Spreizung des Stromes um ca. 30 - 45° nach oben und unten ausbildet. Diese wird aufgehoben durch ein nach 120° Strömung eingelassenes, sogenanntes 3x 6 geteiltes Rohrbogenpaket. Das Gleiche wird nach Ausgang des ersten Paketes im Bereich der folgenden 100 - 120° Umdrehung ebenfalls eingelassen. Diese 3x 6 geteilten Rohrbogenpakete gewährleisten eine waagerecht geführte Strömung und man erreicht eine ruhigere Oberfläche und ruhigere und intensivierte - für Partikel auswirkende zentrifugale und für Leichtstoffe auswirkende zentripetale - Mechanismen. Damit wird eine wesentlich begünstigte Öl- und Partikelseparierung erreicht, in dem der notwendige Weg zur Mitte verbessert wird. Mit dieser Entwicklung ist eine verbesserte Reinigungsleistung von Ölabscheidung und Partikelseparierung im Galaxie-Wirbelsystem erreicht worden.

Besonders vorteilhafte Ausführungen sind in den abhängigen Patentansprüchen angegeben.

### Kurze Beschreibung der Zeichnungen

- Fig. 1: eine schematische Darstellung eines ersten Ausführungsbeispiels eines erfindungsgemässen Abscheiders, im mit einer vertikalen, nichtkonischen Ausbildung der spiralförmigen Trennwände;
- Figur 2: eine schematische Darstellung eines zweiten Ausführungsbeispiels eines erfindungsgemässen Abscheiders, im mit einer konischen Ausbildung der spiralförmigen Trennwände;
- Figur 3: eine schematische Darstellung mit einer alternativen Ausgestaltung des Ölabzuges mit einer vertikalen, nichtkonischen Ausbildung der spiralförmigen Trennwände gemäss Figur 1; und

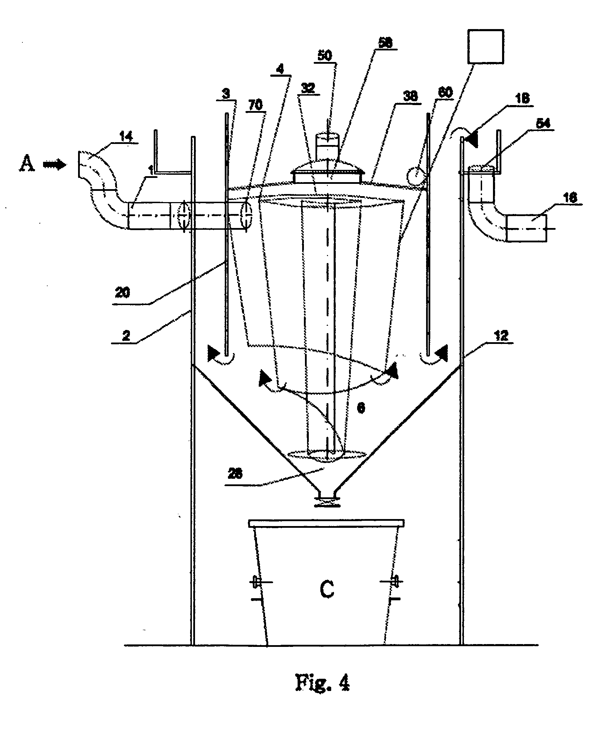

- Figur 4: eine schematische Darstellung mit einer alternativen Ausgestaltung des Schlammabzuges mit einem Auslauf in einen Siebcontainer mit einer konischen Ausbildung der spiralförmigen Trennwände gemäss Figur 2.

### Wege zur Ausführung der Erfindung

Das hier dargestellte Ausführungsbeispiel entspricht dem im Stand der Technik dargestellten, soweit es durch die speziellen Massnahmen der Erfindung nicht abgewandelt ist. Daher wird hier auf den in der EP 0 960 643 A1 dargestellten Beschreibungstext zunächst einmal zurückgegriffen, um die Grundversion zu beschreiben.

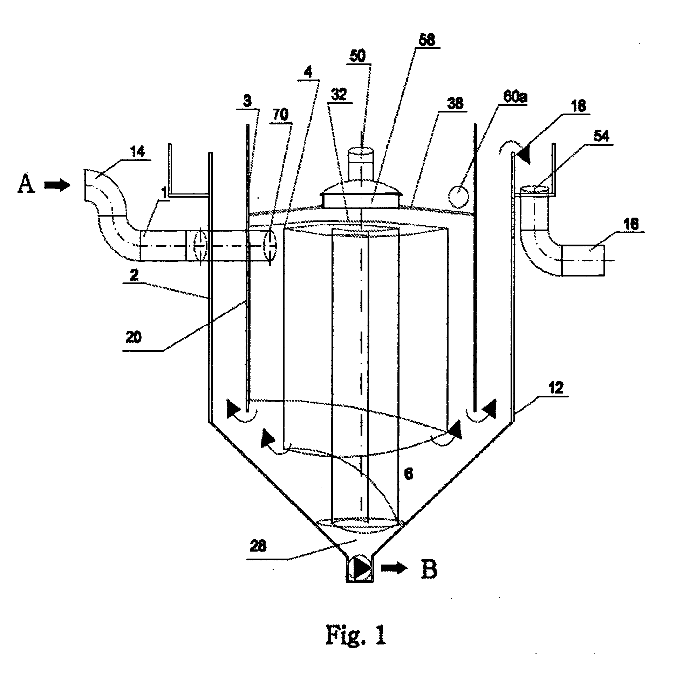

Ein in Fig. 1 dargestelltes u Ausbildungsbeispiel eines erfindungsgemässen Abscheiders ist zum Auffangen von Leichtflüssigkeit und ggf. Schlamm bestimmt, die als -üblicherweise - kleinere Menge in einer grösseren Menge Schwerflüssigkeit - üblicherweise Wasswer - enthalten und davon mitgeführt werden.

Der Abscheider umfasst ein Abscheidebecken 12 mit einem Zulaufrohr 14 für die Zuleitung des zu trennenden Gemisches und einem Ablaufrohr 16 für die Ableitung der von der Leichtflüssigkeit (beispielsweise Öl) und ggf. vom Schlamm weitgehend befreite Schwerflüssigkeit (beispielsweise Wasser). Das Zulaufrohr 14 und das Ablaufrohr 16 sind am dem im oberen Teil im Wesentlichen hohlzylindrisch mit vertikaler Achse und im unteren Teil nach unten konisch verjüngt ausgebildeten Abscheidebecken 12 im Wesentlichen diametral einander gegenüberliegend angeordnet. Die Ablaufschwelle 18 bestimmt durch ihre Höhe einen (nicht näher dargestellten) niedrigsten Flüssigkeitsspiegel im Abscheidebecken 12.

Im Abscheidebecken 12 ist ein Gemischtrenner und Leichtflüssigkeit-Sammler 20 angeordnet, der eine rohrförmige Wandung 3 um eine im wesentlichen vertikalen Achse aufweist. Vom Zulaufrohr 14 gelangt das Gemisch zum Inneren des Sammlers 20, indem das Zulaufrohr 14 durch die Wandung 3 des Sammlers 20 hindurch und annähernd tangential dazu in den Sammler 20 einmündet. Aus einem unteren Bereich des Sammlers 20 gelangt Schwerflüssigkeit und ggf. Schlamm zu einem unteren Bereich 28 des Abscheidebeckens 12, der zweckmässigerweise als Schlammfangraum ausgebildet ist.

Innerhalb des Sammlers 20 ist eine flächige Trennwand 4 angeordnet, die sich, ausgehend von der Wandung 3 des Sammlers 20, im Wesentlichen bis zur Achse des Sammlers 20 mit spiralartigen Windungen einrollt. Präziser ausgedrückt ist die Trennwand 4 im Wesentlichen als Ausschnitt einer Fläche geformt, welche sich aus einer Erzeugenden 32 und einer spiralartigen Leitkurve ergibt. Aufeinanderfolgende Windungen der Trennwand 4 definieren miteinander einen vertikalen spiralartigen Zwischenraum, während eine äusserste Windung der Trennwand 4 zusammen mit der Wandung 3 des Sammlers 20 einen äussersten Zwischenraum des Sammlers 20 definiert, in welchen das Zulaufrohr 14 einmündet. Dementsprechend weist der äusserste Zwischenraum des Sammlers 20 im Bereich einer Eintrittsmündung 70 des Zulaufrohres 14 mit einem Übergangsstück zur Strömungsverbesserung eine horizontal-radiale lichte Weite auf, die annähernd der horizontalen Weite des Zulaufrohres 14 selbst entspricht.

Der obere Rand der Wandung 3 des Sammlers 20 liegt höher als der von der Ablaufschwelle 18 bestimmte höchste Flüssigkeitsspiegel.

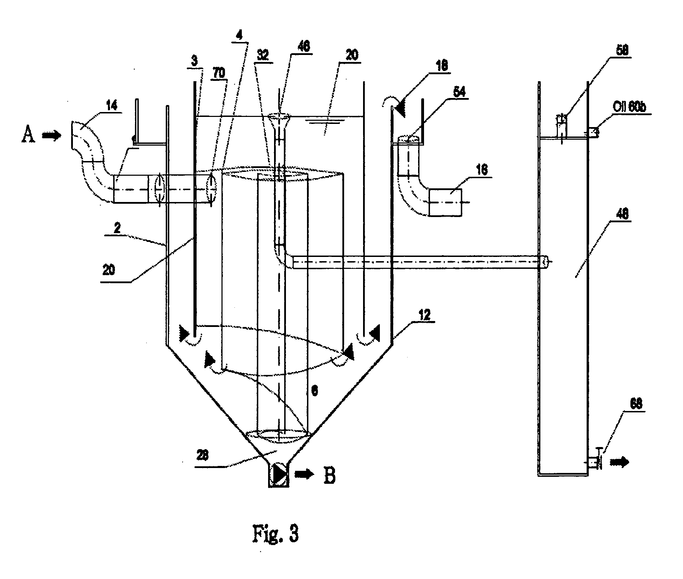

In Figur 3 dargestellt ist mittig-axial im Sammler 20 ein Abzugsrohr 46 angeordnet, dessen obere Öffnung etwa auf Höhe des niedrigsten Flüssigkeitsspiegels liegt. Dieses Abzugsrohr 46 führt zu einem Ölabdruckbehälter 48, der Öle speichert und auf den kleinen Wasserablauf 68 einen Sog ausübt und über ein Ölabdrückrohr 58, das höher liegt als der maximale Betriebswasserstand im Abscheider bei einem bestimmten Ölstand das Öl überlaufen lässt.

Das Abzugsrohr 46 kann auch den ist flexibel oder ausziehbar ausgebildet sein und an einem zum Schwimmen auf der Flüssigkeit vorgesehenen Schwimmkörper auf solche Weise angeordnet sein, dass sich die obere Öffnung 58 des Abzugsrohres stets unweit des Flüssigkeitsspiegels auf der Achse des Sammlers 20 befindet.

Es kann eine (nicht dargestellte) Verbindung zum Rückführen von Flüssigkeit zum Sammler vorgesehen werden. Diese Verbindung kann beispielsweise als kleines Loch mit angeschlossener Leitung im oberen Teil der Tauchwand ausgebildet sein und dient im wesentlichen dazu, die von den Wichte-Unterschieden bewirkten Unterschiede der Flüssigkeitsspiegel in den verschiedenen Teilen der Anlage zu nutzen, um die allerletzten aufgeschwommenen Partikel und Tröpfchen etc. von Leichtflüssigkeit aus der austretenden Schwerflüssigkeit zu entfernen und zum Sammler zurückzuführen.

Um die Koaleszenz der aufgeschwommenen Partikel und Tröpfchen etc. der Leichtflüssigkeit zu fördern, ist die Trennwand auf ihren beiden Oberflächen d.h. auf ihren beiden vertikalen Seiten mit verschiedener Beschaffenheit ausgebildet. Auf der nach aussen gewandten Seite ihrer Windungen ist die Trennwand 4 von der Leichtflüssigkeit weniger benetzbar ausgebildet als auf der nach innen gewandten Seite ihrer Windungen.

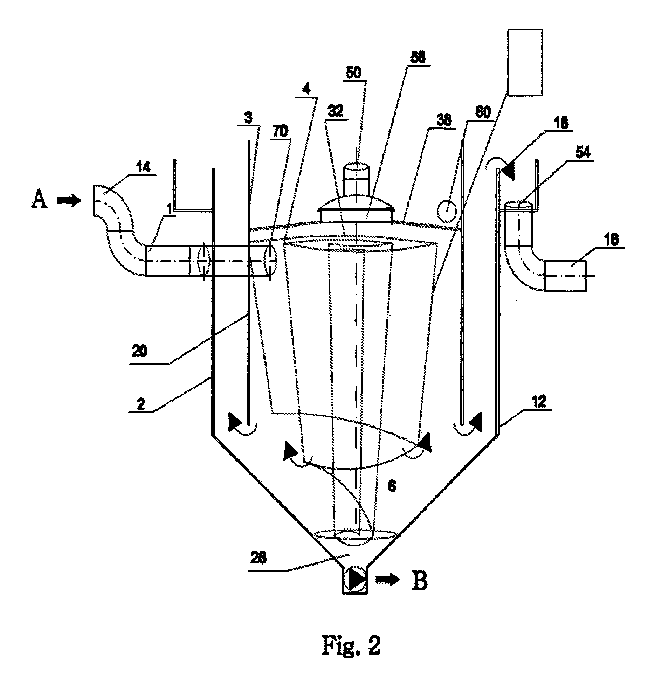

In einem verbesserten Ausführungsbeispiel sind - wie in Figur 2 dargestellt - die Windungen der spiralförmigen Trennwand 4 konisch angeordnet derart, dass die unteren Bereiche der Trennwand jeweils einen kleineren Spiralradius aufweisen als die obere Bereiche. Durch diese Geometrie lässt sich - wie sich gezeigt hat - eine verbesserte Trennung von Schlamm, Leichtflüssigkeit und Schwerflüssigkeit erzielen.

In einer alternativen Ausführung des Abzugs der Leichtflüssigkeit ist - wie in Figur 3 hier am Grundbeispiel der nichtkonischen Ausgestaltung der spiralförmigen Trennwand dargestellt, aber selbstverständlich auch an der verbesserten Ausführung der konischen Ausgestaltung einsetzbar - kein Ölabrückraum vorgesehen, sondern ein als Rohr ausgestalteter Leichtflüssigkeitsabzug (Ölabzug), der in einen Leichtflüssigkeitsbehälter (Ölbehälter) mit einem oberen Ventil für die gesammelte Leichtflüssigkeit (Öl) und einem unteren Ventil für ein allenfalls einem weiteren Abscheider zuzuführenden Rest.

Zur Erzeugung der gewünschten Oberflächenbeschaffenheit kann die Trennwand auf ihrer nach aussen gewandten Seite mit einem die Leichtflüssigkeit abweisenden Material überzogen, beschichtet oder gestrichen, während die Trennwand sowie die Wandung 3 des Sammlers 20 auf ihrer nach innen gewandten Seiten mit einem von der Leichtflüssigkeit gut benetzbaren Material überzogen, beschichtet oder gestrichen sind. Beispielsweise kann das die Leichtflüssigkeit abweisende Material ein ölabweisendes Polymer sein, während das von der Leichtflüssigkeit benetzbare Material beispielsweise ein ölfreundliches bzw. ölfreundlicheres Polymer wie Polyamid oder dergleichen sein kann.

Der Abscheider wurde konzipiert, um Öle und zugleich und insbesondere, absetzbare Stoffe im µm-Bereich optimal zu separieren. Leichtflüssigkeiten mit dem spezifischen Gewicht von 0,85 fliessen bei einem Ölstand von 12 cm, der sich schnell im oberen Teil mittig ausbildet, automatisch über. Sie sind durch die mittige Aufwölbung mit Abdrückrohr ausserhalb des Strömungsbereiches, werden also nicht mehr mitgerissen. Absetzbare Stoffe werden mit einem minimalen Abwasseranteil unten abgezogen und dann einer weiteren Behandlung zugeführt.

Durch Testreihen konnte gezeigt werden, dass sich die Feinstpartikel nach 360° gebündelt wie ein Film an der äusseren Wand der Spirale entlang zur Mitte bewegen. Die Spirale hat unterschiedliche Längen. Die ca. 360° rohrähnliche Mitte der Spirale ist am längsten und zwar bis ca. 50 mm über der Absaugpumpe ausgebildet. Grössere Partikel und Metall- oder Stein-Stücke fallen in der ersten 360° Umdrehung automatisch nach unten - auch durch den waagrecht, dann nach oben bewegenden Hauptstrom hindurch. Feinere Partikel erreichen die zweite Umdrehung von 360° und können durch die tiefer ausgebildete Spiralwand tiefer unten im Kreislauf der zweiten Spirale gehalten werden, wo die waagrechte Strömung geringer ist. Sie fallen deshalb durch die langsamere Strömung in die Trichterspitze. Feinstpartikel im Bereich unter 50 µm bleiben bis zur zweiten Umdrehung - also 720° - in der zentrifugalen Bewegung an der Spiralaussenwand und werden in den dritten Umdrehungskreis geleitet. Hier sind sie vom Strömungsweg des Hauptstromes abgegrenzt und nur noch dem Sog der am Trichter angeschlossenen Saugpumpe ausgesetzt und werden mit den durch den Hauptstrom durchgefallenen gröberen Stoffen zur Bypassbehandlung weitergefördert und ausgeschleust.

Die den gesamten Abscheideraum umlaufende Ablaufschwelle begünstigt dabei die beruhigte und gleichmässige Ablaufströmung der Schwerflüssigkeit und damit verbunden eine sehr gute Reinigungsleistung von Leichtflüssigkeiten und insbesondere von absetzbaren Feiststoffen.

### Bezugszeichenliste

- 1: Zulauf
- 2: Aussenwand des Abscheiders
- 3: rohrförmige Wandung des Sammlers
- 4: spiralförmige Trennwand
- 6: unterer Bereich des Sammlers
- 12: Abscheidebecken
- 14: Zulaufrohr
- 16: Ablaufrohr für Schwerflüssigkeit/Wasser
- 18: Ablaufschwelle
- 20: Gemischtrenner und Leichtflüssigkeitssammler
- 28: unterer, vorzugsweise trichterförmiger Bereich des Abscheidebeckens, Schlammabsetzraum
- 32: Erzeugende
- 38: oberer Rand der Wandung des Sammlers
- 46: Abzugsrohr
- 48: Ölabdrückraum
- 50: Ölablaufrohr
- 54: Austrittsmündung des Ablaufrohres
- 58: Überlauf zum Ölabdrückraum
- 60a, 60b: Ölablaufkanal
- 68: kleiner Wasserablauf
- 70: Eintrittsmündung mit Übergangsstück zur Strömungsverbesserung
- B: Schlammabzugsystem
- C: Siebcontainer

## Patentansprüche

1. Abscheider zum Trennen eines Ein- oder Mehrphasengemisches,
mit einem Abscheidebecken (12) zum Auffangen einer Leichtflüssigkeit und eines Schlammes, einem Zulaufrohr (14) für das zu trennende Gemisch und einem Ablaufrohr (16) für eine von Leichtflüssigkeit und von Schlamm weitgehend befreite Schwerflüssigkeit,
wobei innerhalb des Abscheidebeckens (12) ein Gemischtrenner und Leichtflüssigkeitssammlers (20) angeordnet ist, der eine rohrförmige Wandung (3) aufweist,
wobei der Abscheider (12) so ausgebildet ist, dass das Gemisch vom Zulaufrohr (14) in den Gemischtrenner und Leichtflüssigkeitssammler (20) gelangt und aus einem unteren Bereich des Gemischtrenners und Leichtflüssigkeitssammlers (20) Schwerflüssigkeit und davon getrennt Schlamm in den unteren Bereich des Abscheidebeckens (12) hin gelangt,
wobei innerhalb des Gemischtrenner und -Leichtflüssigkeitssammlers (20) eine Trennwand (4) angeordnet ist, die ausgehend von der Wandung (3) des Gemischtrenners und Leichtflüssigkeitssammlers (20) in Richtung Achse des Gemischtrenners und Leichtflüssigkeitssammlers (20) eingerollt ist und mit aufeinanderfolgenden Windungen der Trennwand (4) miteinander einen spiralartigen Zwischenraum definiert, während eine äussere Windung der Trennwand (4) einen äussersten Zwischenraum definiert,
**dadurch gekennzeichnet, dass**
der Abscheider im unteren Bereich ein Schtammabzugssystem (B) zum Ablassen von Schlamm aufweist,
sich ein innerer Teil der Spirale des spiralartigen Zwischenraums bis weit in den unteren Bereich des Abscheidebeckens (12) bis nahe bis an das Schlammabzugssystem (B) hinzieht, wobei die innere Windung der Trennwand (4) tiefer in das Abscheidebecken (12) geführt ist als die äussere Windung, das Abscheidebecken (12) zumindest im unteren Bereich trichterförmig ausgebildet ist, wodurch im unteren Bereich des Trichters ein Schlammabsetzraum (28) ausgebildet ist und das Zulaufrohr (14) durch die Wand (2) des Abscheiders (12) und dann durch die Trennwand (4) des Gemischtrenners und Leichtflüssigkeitssammlers (20) hindurch und annähernd tangential dazu in den äusseren Zwischenraum des Gemischtrenners und Leichtflüssigkeitssammlers (20) einmündet.

2. Abscheider nach Anspruch 1, **dadurch gekennzeichnet, dass** der Abscheider im oberen Bereich eine den ganzen Abscheider umfassende, umlaufende Überfallkante (18) für die Schwerflüssigkeit aufweist.

3. Abscheider nach einem der Ansprüche 1 oder 2, **dadurch gekennzeichnet, dass** die Windungen der Trennwand (4) konisch angeordnet sind derart, dass die unteren Bereiche der Trennwand (4) jeweils einen kleineren Spiralradius aufweisen als die obere Bereiche.

4. Abscheider nach einem der Ansprüche 1 bis 3, **dadurch gekennzeichnet, dass** im Gemischtrenner und Leichtflüssigkeitssammler (20) ein Abzugsrohr angeordnet ist, dessen obere Öffnung zwischen der Höhe wenig unter dem niedrigsten Flüssigkeitsstand und wenig unter dem maximalen Betriebsflüssigkeitsstand liegt und das zu einem Olabdrückraum (48) hin verläuft, und von einem oberen Bereich des Ölabdrückraumes (48) ein Olüberlauf (58), vorhanden ist, dessen Oberkante höher liegt als der maximale Betriebsflüssigkeitsstand und von dort ein Kanal zu einem Öltank führt.

5. Abscheider nach einem der Ansprüche 1 bis 4, **dadurch gekennzeichnet, dass** der Abscheiderbehälter (12) eine, vorzugsweise den gesamten Behälter umlaufende Überfallkante oder Ablaufschwelle (18) für die Schwerflüssigkelt und vorzugsweise eine tiefer liegende umlaufende Rinne hat, der sich das Ablaufrohr (16) anschliesst.

6. Abscheider nach einem der Ansprüche 1 bis 5, **dadurch gekennzeichnet, dass** die Trennwand (4) strömungsbegünstigende Elemente, insbesondere Abrisskanten, aufweist.

7. Abscheider nach einem der Ansprüche 1 bis 6, **dadurch gekennzeichnet, dass** in dem Zulaufkanal zum Öltank ein pegelgesteuertes Ventil, vorzugsweise ein Schwimmer und ein Ventilsitz darüber, angeordnet ist, so dass bei sich füllendem Zulaufkanal-Durchlass den Zulauf zum Durchlass sperrt.

8. Abscheider nach einem der Ansprüche 4 bis 7, **dadurch gekennzeichnet, dass** das Abzugrohr flexibel oder ausziehbar ausgebildet und an einem zum Schwimmen auf der Flüssigkeit vorgesehenen Schwimmkörper angeordnet ist und der Ölabdrückraum (48) über Selbstgefälle oder ein Fördersystem dieser Ölabdrückraum (48) beschickt wird.

9. Abscheider nach einem der Anspruch 8, **dadurch gekennzeichnet, dass** sich das Abzugrohr im Abscheider befindet.

## Claims

1. A separator for separating a single phase or multi-phase mixture,
comprising a separation pool (12) for collecting a light liquid and a sludge, an inlet tube (14) for the mixture to be separated, and an outlet tube (16) for a heavy liquid substantially freed from light liquid and sludge,
wherein a mixture separator and a light liquid collector (20) having a tubular wall (3) are arranged within the separation pool (12),
wherein the separator (12) is configured in such manner that the mixture passes from the inlet tube (14) into the mixture separator and light liquid collector (20) and that heavy liquid and sludge separated therefrom pass from a lower portion of the mixture separator and light liquid collector (20) into the lower portion of the separation pool (12),
wherein a separation wall (4) is arranged within the mixture separator and light liquid collector (20) and is configured curling inwards starting from the wall (3) of the mixture separator and light liquid collector (20) in the direction of the axis of the mixture separator and light liquid collector (20), with subsequent windings of the separation wall (4) mutually defining a spiral-like interstitial space, while an outer winding of the separation wall (4) defines an outer space,
**characterized in that**
the separator comprises in the lower portion thereof a sludge removal system (B) for discharging sludge,
an inner part of the spiral of the spiral-like interstitial space extends far into the lower portion of the separation pool (12) all the way to near the sludge removal system (B), the inner winding of the separation wall (4) is guided deeper into the separation pool (12) than the outer winding, the separation pool (12) is configured, at least in the lower portion thereof, in funnelshaped manner, whereby a sludge sedimentation cavity (28) is formed in the lower portion of the funnel, and the inlet tube (14) passes through the wall (2) of the separator (12) and then through the separation wall (4) of the mixture separator and light liquid collector (20) and leads approximately tangentially thereto into the outer interstitial space of the mixture separator and light liquid collector (20).

2. The separator according to claim 1, **characterized in that** the separator comprises in the upper portion thereof a drain threshold (18) for the heavy liquid circumferentially surrounding the entire separator.

3. The separator according to one of claims 1 or 2, **characterized in that** the windings of the separation wall (4) are conically arranged in such manner that the lower portions of the separation wall (4) each have a smaller spiral radius than the upper portions.

4. The separator according to one of claims 1 to 3, **characterized in that** in the mixture separator and light liquid collector (20) there is arranged a discharge tube, the upper opening of which is disposed between the height position slightly below the lowest liquid level and slightly below the maximum operating liquid level and which extends to an oil pressing compartment (48), and that an oil overflow (58) is provided at an upper portion of the oil pressing compartment (48), the upper edge of which is disposed higher than the maximum maximum operating liquid level and that from there a channel leads to an oil tank.

5. The separator according to one of claims 1 to 4, **characterized in that** the separator container (12) comprises a drain threshold or outlet threshold (18) for the heavy liquid that preferably surrounds the entire container, and preferably a lower positioned circumferentially surrounding groove, to which is adjoined the outlet tube (16).

6. The separator according to one of claims 1 to 5, **characterized in that** the separation wall (4) comprises flow promoting elements, particularly tear-off edges.

7. The separator according to one of claims 1 to 6, **characterized in that** in the inlet channel to the oil tank there is arranged a level-controlled valve, preferably a floater with a valve seat thereabove in such manner that supply to the inlet is blocked when the inlet channel is filled up.

8. The separator according to one of claims 4 to 7, **characterized in that** the discharge tube is configured flexible or extensible and is disposed on a floating body intended to float on the liquid, and that the oil pressing compartment (48) is charged by means of an inherent slope or a feed system of this oil pressing compartment (48).

9. The separator according to one of claims 8, **characterized in that** the discharge tube is arranged within the separator.

## Revendications

1. Séparateur permettant de séparer un mélange mono ou multiphasé comprenant :
un réservoir de séparation (12) permettant de recueillir un liquide léger et des boues, une tubulure d'alimentation (14) du mélange à séparer et une tubulure d'évacuation (16) de liquide lourd largement débarrassé du liquide léger et des boues,
dans lequel
à l'intérieur du réservoir de séparation (12) est monté un élément séparateur de mélange et collecteur de fluide léger (20) qui comporte une paroi tubulaire (3),
le séparateur (12) est conformé de sorte que le mélange provenant de la tubulure d'alimentation (14) pénètre dans l'élément séparateur de mélange et collecteur de fluide léger (20), et, qu'à partir de la partie inférieure de cet élément (20) le liquide lourd et la boue séparée de celui-ci parvienne dans la partie inférieure du réservoir de séparation (12),
à la partie interne de l'élément séparateur de mélange et collecteur de liquide léger (20) est montée une paroi de séparation (4), qui, à partir de la paroi (3) de cet élément (20) s'enroule en direction de l'axe de celui-ci et définit par des spires successives, un volume intermédiaire en forme de spirale tandis que la spire externe de la paroi de séparation (4) définit un volume intermédiaire externe,
**caractérisé en ce que**
le séparateur comporte, à sa partie inférieure un système d'extraction (B) permettant l'élimination des boues,
la partie interne de la spirale définie par le volume intermédiaire en forme de spirale s'étend largement à la partie inférieure du réservoir de séparation (12) jusqu'à proximité du système d'extraction des boues (B), la spire interne de la paroi de séparation (4) s'étendant plus profondément dans le réservoir de séparation (12) que la spire externe, le réservoir de séparation (12) étant réalisé en forme d'entonnoir au moins à sa partie inférieure, de façon à former un volume de sédimentation des boues (28), à la partie inférieure de l'entonnoir et la tubulure d'alimentation (14) pénètre au travers de la paroi (2) du séparateur (12) puis au travers de la paroi de séparation (4) de l'élément séparateur de mélange et collecteur de liquide léger (20) et débouche essentiellement tangentiellement dans le volume intermédiaire externe de cet élément (20).

2. Séparateur conforme à la revendication 1,
**caractérisé en ce que**
le séparateur comporte à sa partie supérieure une arête de déversement périphérique (18) du liquide lourd entourant la totalité du séparateur.

3. Séparateur conforme à l'une des revendications 1 et 2,
**caractérisé en ce que**
les spires de la paroi de séparation (4) sont coniques de sorte que les parties inférieures de la paroi de séparation (4) aient respectivement un rayon spiral plus petit que les parties supérieures.

4. Séparateur conforme à l'une des revendications 1 à 3,
**caractérisé en ce que**
dans l'élément séparateur de mélange et collecteur de liquide léger (20) est montée une tubulure d'extraction dont l'ouverture supérieure est positionnée à une hauteur située entre une hauteur un peu inférieure au niveau de liquide le plus bas et une hauteur un peu inférieure au niveau du liquide maximum en cours de fonctionnement et s'étend vers un volume d'extraction d'huile (48) et, à la partie supérieure de ce volume d'extraction d'huile (48) il est prévu un déversoir d'huile (58) dont l'arête supérieur est située à un niveau supérieur au niveau de liquide maximum en cours de fonctionnement et à partir de là, un canal conduit à un réservoir d'huile.

5. Séparateur conforme à l'une des revendications 1 à 4,
**caractérisé en ce que**
le réservoir de séparation (12) comporte une arête de déversement ou seuil d'écoulement (18) du liquide lourd entourant de préférence la totalité du récipient et de préférence une goulotte périphérique située à un niveau inférieur qui se raccorde à la tubulure d'évacuation (16).

6. Séparateur conforme à l'une des revendications 1 à 5,
**caractérisé en ce que**
la paroi de séparation (4) comporte des éléments favorisant l'écoulement, en particulier des arêtes de rupture.

7. Séparateur conforme à l'une des revendications 1 à 6,
**caractérisé en ce que**
dans le canal conduisant au réservoir d'huile est montée une soupape commandée par le niveau, de préférence un flotteur surmonté d'un siège de soupape de façon à bloquer le passage lorsque le canal se remplit.

8. Séparateur conforme à l'une des revendications 4 à 7,
**caractérisé en ce que**
la tubulure d'extraction est réalisée flexible ou extensible et est montée sur un corps de flotteur prévu pour flotter sur le liquide, et le volume d'extraction d'huile (48) est alimenté par déversement automatique ou par un système d'alimentation de cet espace (48).

9. Séparateur conforme à la revendication 8,
**caractérisé en ce que**
la tubulure d'extraction est située dans le séparateur.
